# EUROPEAN PATENT APPLICATION

(11) **EP 3 521 011 A1**
(43) Date of publication of application: **07.08.2019**
(21) Application number: 18154497.4
(22) Date of filing: 31.01.2018
(51) Int. Cl.: B32B 5/12, B29C 70/38, B32B 5/26, B29C 65/00

(54) **SCRAP-MINIMIZING METHODS FOR PRODUCING LAMINATES FROM TAPES AND LAMINATES PRODUCED USING THOSE METHODS**

(71) Applicant: SABIC Global Technologies B.V., 4612 PX Bergen op Zoom (NL)
(72) Inventor: YALDIZ, Recep, 6160 AH Geleen (NL); VERGHESE, Nikhil, 6160 AH Geleen (NL); THEOFANOUS, Theofanis, 6160 AH Geleen (NL)
(74) Representative: J A Kemp

(57) **Abstract**

This disclosure includes scrap-minimizing methods for producing laminates from tapes and laminates produced using those methods. Some methods include unrolling first and second sections of tape from respective rolls, the first section having a first width that is smaller than a second width of the second section, cutting the first section along its width to produce one or more rectangular first laminae, each having a length that is within 5% of the second width, cutting the second section along its width to produce one or more rectangular second laminae, each having a length that is within 5% of the first width, and layering the laminae to form a rectangular stack in which the width(s) of the first lamina(e) are aligned with the length(s) of the second lamina(e) and having a length and a width that are within 5% of the second width and the first width, respectively.

## Description

### BACKGROUND

### 1. Field of Invention

The present invention relates generally to fiber-reinforced laminates, and, more particularly, to scrap-minimizing methods for producing fiber-reinforced laminates from fiber-reinforced tapes and fiber-reinforced laminates produced using those methods.

### 2. Description of Related Art

Fiber-reinforced laminates can be used to form structures having advantageous structural characteristics, such as high stiffnesses and high strengths, as well as relatively low weights, when compared to structures formed from conventional materials. As a result, fiber-reinforced laminates are used in a wide variety of applications across a wide range of industries, including the automotive, aerospace, and consumer electronics industries.

Such a fiber-reinforced laminate can be produced by layering sections of fiber-reinforced tapes to form a stack and then consolidating the stack. Within the stack, the orientations of the tape sections-and thus their fibers-can be selected to tailor the structural properties of the laminate.

### SUMMARY

Typically, once the tape sections are properly oriented in the stack, the tape sections must be cut-either before or after the stack is consolidated-to achieve the desired shape of the laminate. Such cutting, however, creates scrap. This scrap, exacerbated by the relatively high cost of fiber-reinforced tapes, can render the use of such laminates uneconomical, particularly in mass produced parts.

Some of the present methods can be used to form a rectangular stack of laminae (that can be consolidated to form a rectangular laminate) from sections of fiber-reinforced tapes while minimizing scrap by layering sections of tape having differing widths-including a width that corresponds to the width of the stack and a width that corresponds to the length of the stack-produced from rolls of tape having such widths, the layering such that sections of differing widths are oriented with their widths perpendicular to one another. Such layering can occur before or after the sections are separated from their respective rolls of tape. In this way, little to no trimming of the sections is required to produce the stack.

Additionally, tape sections that are misaligned during layering may extend beyond the desired shape of the laminate, necessitating their pre- or post-consolidation trimming and generating costly scrap. In some of the present methods, the sections can be aligned to assume their desired orientations within the stack before they are cut from their respective rolls-such alignment being easier than that of loose tape sections-thereby facilitating alignment of the sections within the stack and further minimizing scrap.

The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed embodiment, the term "substantially" may be substituted with "within [a percentage] of" what is specified, where the percentage includes .1, 1, 5, and 10 percent.

The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or.

Further, a device or system that is configured in a certain way is configured in at least that way, but it can also be configured in other ways than those specifically described.

The terms "comprise" (and any form of comprise, such as "comprises" and "comprising"), "have" (and any form of have, such as "has" and "having"), and "include" (and any form of include, such as "includes" and "including") are open-ended linking verbs. As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any embodiment of any of the apparatuses, systems, and methods can consist of or consist essentially of - rather than comprise/have/include - any of the described steps, elements, and/or features. Thus, in any of the claims, the term "consisting of" or "consisting essentially of" can be substituted for any of the open-ended linking verbs recited above, in order to change the scope of a given claim from what it would otherwise be using the open-ended linking verb.

The feature or features of one embodiment may be applied to other embodiments, even though not described or illustrated, unless expressly prohibited by this disclosure or the nature of the embodiments.

Some details associated with the embodiments are described above and others are described below.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers.
**FIG. 1** illustrates some of the present methods for forming a rectangular stack of laminae in which scrap is minimized by producing laminae of differing widths-including a width that corresponds to the width of the stack and a width that corresponds to the length of the stack-from rolls of tape having such widths, and layering the laminae such their widths are aligned with their corresponding stack dimensions.
**FIG. 2** is a schematic view of a system that can be used to perform some of the methods of FIG. 1.
**FIGs. 3, 4A,** and **4B** depict fiber-reinforced tapes that are suitable for use in some of the present methods.
**FIGs. 5A-5C** are top, cross-sectional side, and exploded views, respectively, of a stack of laminae that can be formed using some of the present methods.
**FIG. 6** is a graph showing variations in fiber volume fraction along the width of a lamina that can be included in some of the present stacks of laminae.
**FIG. 7** illustrates some of the present methods for forming a stack of laminae in which scrap is minimized by unrolling sections of tape having matching widths and from rolls of tape having those widths, and layering the sections such that their widths are aligned with one another. The sections can-but need not-have differing fiber orientations (e.g., 0-degree, off-axis, or the like).
**FIG. 8** is a schematic view of a system that can be used to perform some of the methods of FIG. 7.
**FIG. 9** illustrates some of the present methods for forming a rectangular stack of laminae in which scrap is minimized by unrolling narrower section(s) of tape and wider section(s) of tape from rolls of tape having such widths, layering the sections to define an overlapping region in which the widths of the narrower section(s) are perpendicular to the widths of the wider section(s), and separating at least a majority of the overlapping region from the sections.
**FIGs. 10A** and **10B** are schematic top and side views, respectively, of a system that can be used to perform some of the methods of FIG. 9.
**FIGs. 11** and **12** illustrate some of the present methods for forming an off-axis fiber-reinforced tape by joining one or more fiber-reinforced tapes along their lengths to form a fiber-reinforced sheet, cutting the sheet in a direction that is angularly disposed relative to its length to form one or more sections, and, if there are two or more such sections, optionally joining the sections end-to-end.

### DETAILED DESCRIPTION

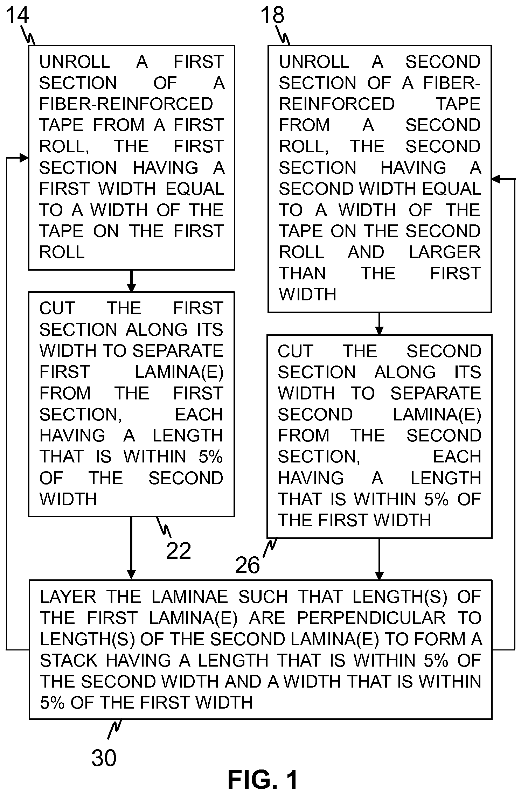

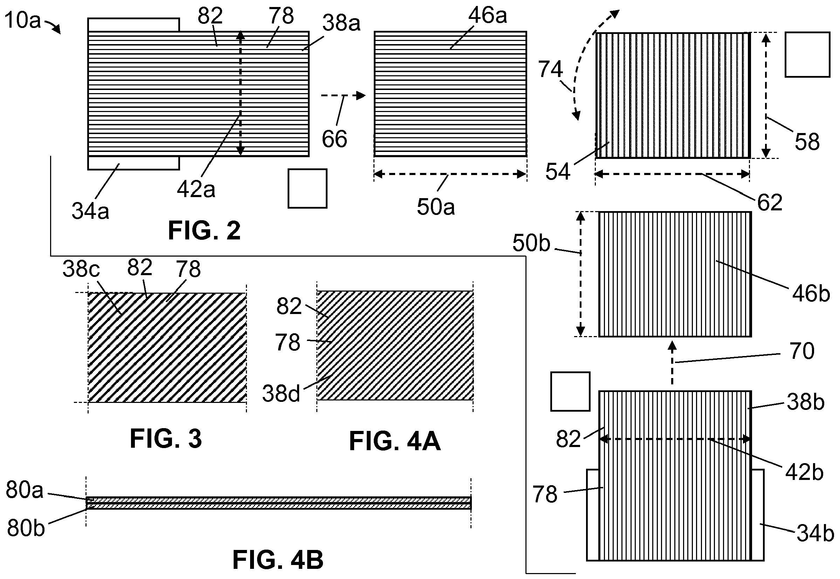

FIG. 1 depicts some of the present methods for forming a rectangular stack of laminae, and FIG. 2 depicts an embodiment 10a of the present systems that can be used to perform at least some of the methods of FIG. 1. While system 10a is referenced to illustrate at least some of the methods of FIG. 1, system 10a is not limiting on those methods, which can be performed using any suitable system.

Some of the present methods include a step 14 of unrolling a first section of a fiber-reinforced tape (e.g., 38a) from a first roll (e.g., 34a) and a step 18 of unrolling a second section of a fiber-reinforced tape (e.g., 38b) from a second roll (e.g., 34b). The first section can have a first width (e.g., 42a) equal to a width of the tape on the first roll, and the second section can have a second width (e.g., 42b) equal to a width of the tape on the second roll. In some methods, the first and second sections can have different widths. To illustrate, the second width can be larger than the first width, such as, for example, at least 10, 15, 20, 25, 30, 35, 40, 45, or 50% larger than (e.g., at least 10% or 30% larger than) the first width.

Some of the present methods include a step 22 of cutting the first section along its width to separate one or more first laminae (e.g., 46a) from the first section. Step 22 can be performed such that each of the first lamina(e) has a length (e.g., 50a) that is substantially equal to the second width (the width of the second section). To illustrate, for each of the first lamina(e), the length can be within 5, 4, 3, 2, or 1% of the second width (e.g., within 5% of the second width). Similarly, some of the present methods include a step 26 of cutting the second section along its width to separate one or more second laminae (e.g., 46b) from the second section. And, step 26 can be performed such that each of the second lamina(e) has a length (e.g., 50b) that is substantially equal to (e.g., within 5, 4, 3, 2, or 1% of or within 5% of) the first width (the width of the first section).

Some of the present methods include a step 30 of layering the first and second laminae to form a rectangular stack of laminae (e.g., 54). For example, step 30 can be performed such that the length(s) of the first lamina(e) are perpendicular to the length(s) of the second lamina(e); accordingly, the stack can have a width (e.g., 58) that is substantially equal to the width of at least one of the first lamina(e) (e.g., a width that is within 5, 4, 3, 2, or 1% of the first width) and a length (e.g., 62) that is substantially equal to the width of at least one of the second lamina(e) (e.g., a length that is within 5, 4, 3, 2, or 1% of the second width). The width and length of the stack can be substantially equal to the desired width and length, respectively, of the laminate to be formed from the stack; thus, the stack (or the laminate, after consolidation of the stack) may require little to no trimming, advantageously minimizing scrap.

As shown, the tape rolls (e.g., 34a and 34b) can be oriented such that the first section is unrolled in a first direction (e.g., 66) that is perpendicular to a second direction (e.g., 70) in which the second section is unrolled. In such methods, the laminae can be layered to form the stack without rotating the stack or the laminae relative to the tape rolls. In other methods, the directions in which the first and second sections are unrolled can be disposed at any suitable angle relative to one another. In methods where the tapes are unrolled in non-perpendicular directions, forming the stack can be accomplished by rotating the stack (e.g., along direction 74) and/or a lamina before layering the lamina on the stack. To illustrate, when layering one of the first lamina(e), the stack and/or the lamina can be rotated such that the length of the lamina is aligned with the length of the stack. And, when layering one of the second lamina(e), the stack and/or the lamina can be rotated such that the length of the lamina is aligned with the width of the stack.

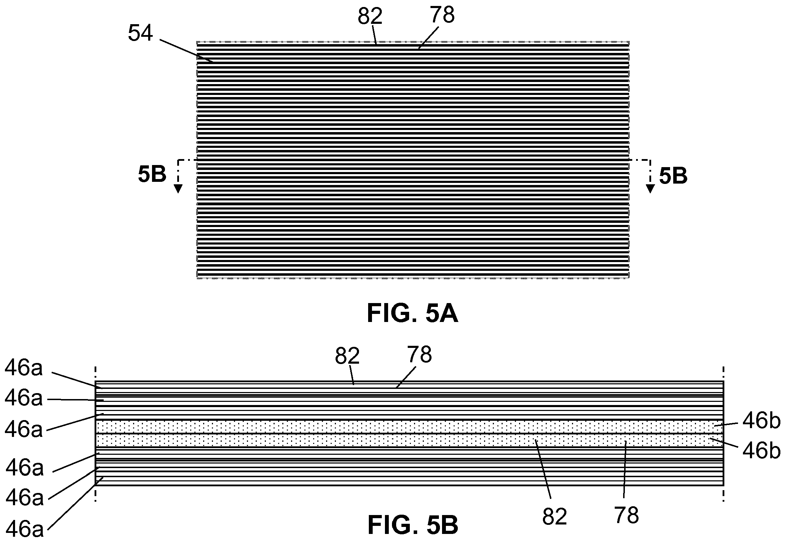

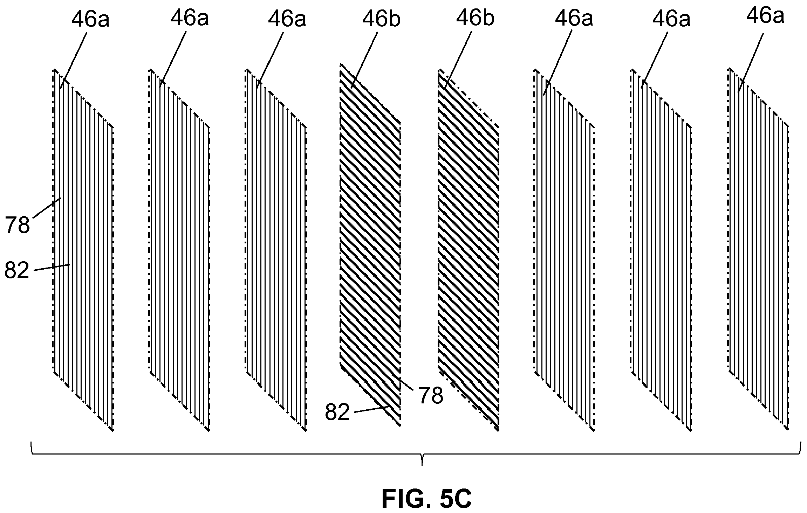

Each of the tapes, and thus each of the first and second laminae, can comprise fibers dispersed within a matrix material (e.g., fibers 78 and matrix material 82, FIG. 5C). To illustrate, such fibers can comprise carbon fibers, aramid fibers, polyethylene fibers, polyester fibers, polyamide fibers, ceramic fibers, basalt fibers, steel fibers, and/or the like. To further illustrate, such a matrix material can comprise a thermoplastic or thermoset matrix material. Non-limiting examples of suitable thermoplastic matrix materials include polyethylene terephthalate, polycarbonate (PC), polybutylene terephthalate (PBT), poly(1,4-cyclohexylidene cyclohexane-1,4-dicarboxylate) (PCCD), glycol-modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polystyrene sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof. And, non-limiting examples of suitable thermoset matrix materials include an unsaturated polyester resin, a polyurethane, bakelite, duroplast, ureaformaldehyde, diallyl-phthalate, epoxy resin, an epoxy vinylester, a polyimide, a cyanate ester of a polycyanurate, dicyclopentadiene, a phenolic, a benzoxazine, a co-polymer thereof, or a blend thereof.

As shown, each of the tapes is a unidirectional tape, or a tape whose fibers are aligned in a single direction as understood by a person of ordinary skill in the art (hereinafter, "fiber direction"). More particularly, for each of the tapes, the fiber direction can be aligned with the length of the tape (e.g., each of the tapes can be a 0-degree unidirectional tape). Thus, in the stack, the fibers of each of the first lamina(e) can aligned with the length of the stack and the fibers of each of the second lamina(e)-having their lengths perpendicular to those of the first lamina(e)-can be aligned with the width of the stack.

Referring additionally to FIG. 3, in some methods, at least one of the tapes (e.g., 38c)-and thus a lamina formed from the tape-can have a fiber direction that is angularly disposed relative to its length. For such a tape, the angle between the fiber direction and the length can be greater than or substantially equal to any one of, or between any two of: 5, 10, 15, 20, 25, 30, 35, 40, 45, 50, 55, 60, 65, 70, 75, 80, 85, or 90 degrees. As shown in FIG. 4A, in some methods, at least one of the tapes can have a first set of fibers that are aligned in a first direction and a second set of fibers that are aligned in a second direction, where the second direction is angularly disposed relative to the first direction (e.g., at any angle described above in this paragraph). In such a tape, the first and second sets of fibers can be woven with one another (e.g., in a plane, twill, satin, basket, leno, mock leno, or the like weave), or, as shown in FIG. 4B, can be of different layers of the tape (e.g., layers 80a and 80b).

Referring now to FIGs. 5A-5C, shown is an exemplary stack of laminae 54 that can be formed using some of the present methods. For stack 54, the first and second tapes used to form the first and second laminae were each 0-degree unidirectional tapes; thus, the first laminae, sections of the first tape having their lengths aligned with the length of the stack, are 0-degree laminae, and the second laminae, sections of the second tape having their lengths aligned with the width of the stack, are 90-degree laminae. Stack 54 includes eight laminae-six first laminae 46a and two second laminae 46b, arranged in a 0, 0, 0, 90, 90, 0, 0, 0 lay-up; however, other stacks can include any suitable number of laminae (e.g., 2, 3, 4, 5, 6, 7, 8, 9, 10, 11, 12, 13, 15, or more laminae) arranged in any suitable lay-up (including non-0- or 90-degree lamina(e)), whether symmetric or asymmetric.

As shown, adjacent ones of the laminae in a stack (e.g., 54) can originate from a same one of the tape rolls (e.g., both can be first laminae 46a or second laminae 46b) or from different ones of the tape rolls (e.g., one can be a first lamina 46a and one can be a second lamina 46b). Layering of laminae in a stack (e.g., 54) can be performed as the laminae are produced from the tape rolls; for example, after at least one of the laminae is layered in the stack, at least one of the tape rolls can be further unrolled and other(s) of the laminae can be separated from that tape.

Some of the present methods include a step of joining (e.g., spot-joining) the laminae in the stack to one another. Such joining can be accomplished in any suitable fashion, such as, for example, via welding (e.g., heat welding, ultrasonic welding, and/or the like), application of heat (e.g., from an infrared heat source, an oven, and/or the like), and/or the like. The laminae can be joined as they are layered in the stack. For example, a first one of the laminae can be layered on and joined to a second one of the laminae before a third one of the laminae is layered on the first lamina

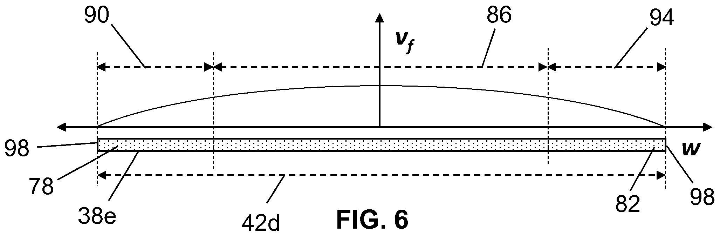

FIG. 6 is a graph showing variations in fiber volume fraction along a width 42d of a lamina 38e that can be included in some of the present stacks of laminae. Lamina 38e is a unidirectional lamina, having a fiber direction that is aligned with its length. As shown, lamina 38e has a center section 86, a first edge section 90, and a second edge section 94, each of which extends along the length of the lamina. Edge sections 90 and 94 can be disposed on opposing sides of center section 86 and can each connect the center section to one of edges 98 of lamina 38e. Each of edge sections 90 and 94 can have a width that is substantially equal to any one of, or between any two of: 5, 10, 15, 20, 25, or 30% of (e.g., at least 10% of) width 42d of lamina 38e. The width of edge sections 90 and 94 can, but need not, be substantially the same.

At least one, and optionally both, of edge sections 90 and 94 can have a fiber volume fraction (e.g., an average fiber volume fraction) that is at least 5.0, 4.5, 4.0, 3.5, 3.0, 2.5, 2.0, 1.5, 1.0, 0.9, 0.8, 0.7, 0.6, or 0.5% lower than (e.g., at least 1% lower than) a fiber volume fraction (e.g., an average fiber volume fraction) of center section 86. This is a fiber volume fraction distribution for at least some 0-degree unidirectional tapes.

As described above, by producing laminae using tapes that have different widths, a rectangular stack of the laminae can be formed with little to no trimming of the tapes along their lengths. As such, each of the laminae in the stack can have substantially the same fiber volume fraction distribution along its width as the tape from which the lamina originated. In contrast, a lamina produced by trimming edges of a tape will have a different fiber volume fraction along its width than the tape.

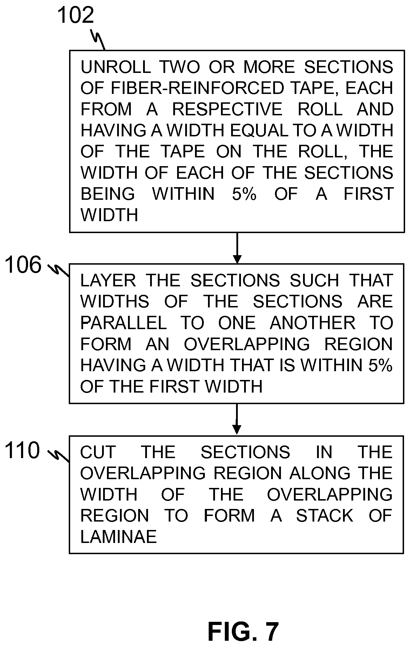

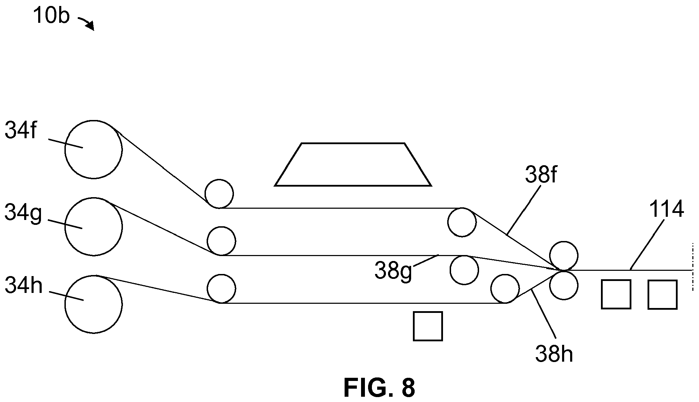

FIG. 7 depicts other embodiments of the present methods for producing a stack of laminae, and FIG. 8 depicts an embodiment 10b of the present systems that can be used to perform at least some of the methods of FIG. 7. While system 10b is referenced to illustrate at least some of the methods of FIG. 7, system 10b is not limiting on those methods, which can be performed using any suitable system.

Some of the present methods include a step 102 of unrolling two or more sections of fiber-reinforced tape (e.g., 38f-38h), each from a respective roll (e.g., one of rolls 34f-34h). Each of the sections-which can, but need not, have differing fiber orientations-can have substantially the same width (e.g., a width that is within 5, 4, 3, 2, or 1% of, or within 5% of, a first width). As shown, three sections are unrolled; however, any suitable number of sections can be unrolled, such as, for example, 2, 3, 4, 5, 6, 7, 8, 9, 10, or more sections.

Some of the present methods include a step 106 of layering the unrolled sections to form an overlapping region (e.g., 114): (1) in which the widths of the sections are parallel to one another; and (2) having a width that is substantially equal to the width of each of the sections (e.g., within 5, 4, 3, 2, or 1% of, or within 5% of, the first width).

Once the sections are so layered, some of the present methods include a step 110 of separating at least a portion of the overlapping region from the sections by cutting the sections along their widths. Such cutting can produce a stack of laminae having a width that is substantially equal to the width of each of the sections (e.g., within 5, 4, 3, 2, or 1% of, or within 5% of, the first width). The sections in the overlapping region can be joined to one another-using any of the techniques described above-before and/or after such cutting.

Layering continuous sections of tape before cutting the sections can facilitate improved laminae alignment in the formed stack. In conventional lay-up techniques, a stack is formed from loose, pre-cut laminae. Aligning sections of continuous tape is easier and more accurate than aligning pre-cut laminae and thus produces a stack having better laminae alignment. Because laminae misalignment can require the edges of the laminae to be cut to produce a laminate having a desired shape and size, these improvements in laminae alignment advantageously minimize scrap.

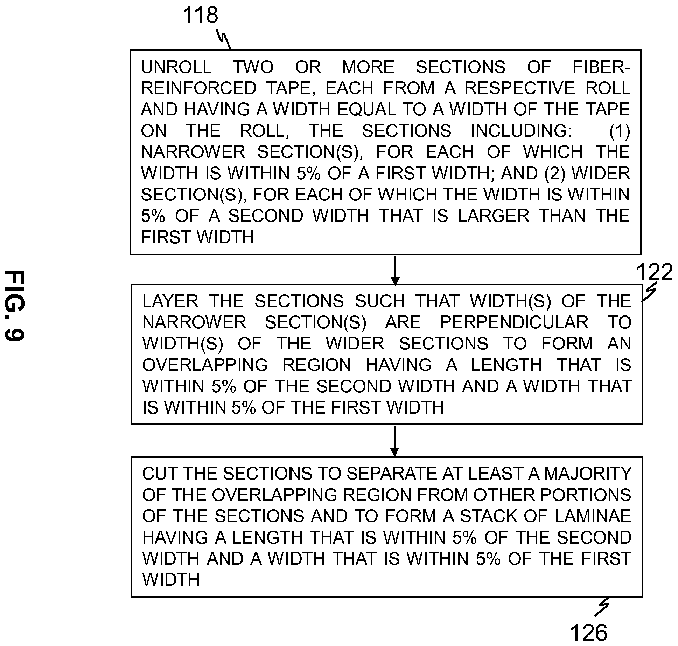

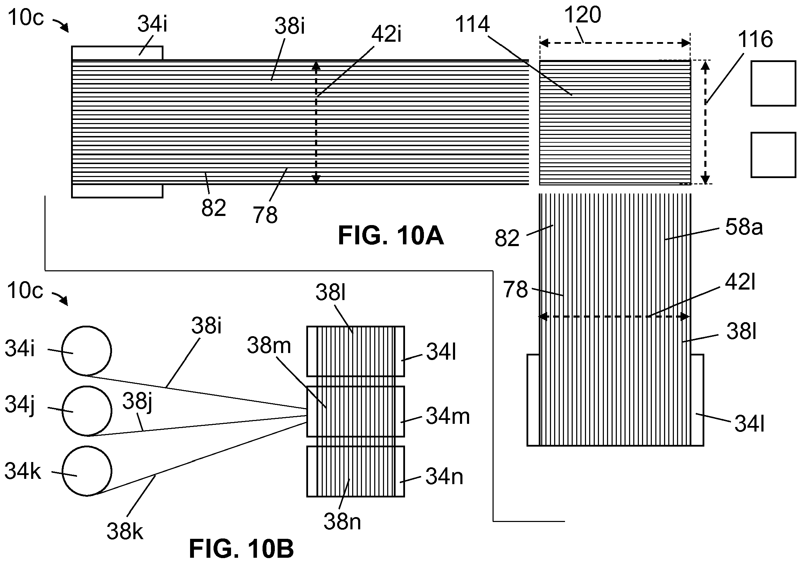

Referring now to FIG. 9, depicted are further embodiments of the present methods for producing a rectangular of laminae. FIGs. 10A and 10B are schematic top and side views, respectively, of an embodiment 10c of the present systems that can be used to perform at least some of the methods of FIG. 9; however, system 10c is not limiting on the methods of FIG. 9, which can be performed using any suitable system.

Some of the present methods include a step 118 of unrolling two or more sections of fiber-reinforced tape (e.g., 38i-38n), each from a respective roll (e.g., one of rolls 34i-34n), including one or more narrower sections (e.g., 38i-38k) and one or more wider sections (e.g., 381-38n). Such narrower and wider sections can be substantially similar to the first and second sections, respectively, described above with respect to FIG. 1. As shown, three narrower sections and three wider sections are unrolled. However, any suitable number of narrower and wider sections can be unrolled, such as, for example, 1, 2, 3, 4, 5, 6, 7, 8, 9, 10, or more narrower sections, and 1, 2, 3, 4, 5, 6, 7, 8, 9, 10, or more wider sections.

Some of the present methods include a step 122 of layering the sections to form an overlapping region (e.g., 114): (1) in which the width(s) of the narrower section(s) are perpendicular to the width(s) of the wider section(s); (2) having a length (e.g., 120) that is substantially equal to (e.g., within 5, 4, 3, 2, or 1% of, or within 5% of) the width of each of the wider section(s); and (2) having a width (e.g., 116) that is substantially equal to (e.g., within 5, 4, 3, 2, or 1% of, or within 5% of) the width of each of the narrower section(s). To accomplish such layering, if there are two or more wider sections or two or more narrower sections, those sections can be disposed one above the other as they are directed to the overlapping region (e.g., and their respective rolls can be disposed one above the other).

In some methods, at step 126, at least a majority of the overlapping region can be separated from other portions of the sections by cutting the narrower and wider sections along their respective widths. As a result, a stack of laminae having a length that is within 5% of (e.g., within 5, 4, 3, 2, or 1% of) the width of each of the wider section(s) and a width that is within 5% of (e.g., within 5, 4, 3, 2, or 1% of) the width of each of the narrower section(s) can be formed. The sections in the overlapping region can be joined to one another-using any of the techniques described above-before and/or after such cutting.

The methods of FIG. 9 can combine the benefits of the methods of FIGs. 1 and 7-using narrower and wider tape sections can reduce or eliminate the need to trim a stack of laminae formed using those sections, and, via the sections being layered before they are cut, alignment of the sections in the stack is improved, each of which reduces scrap generation.

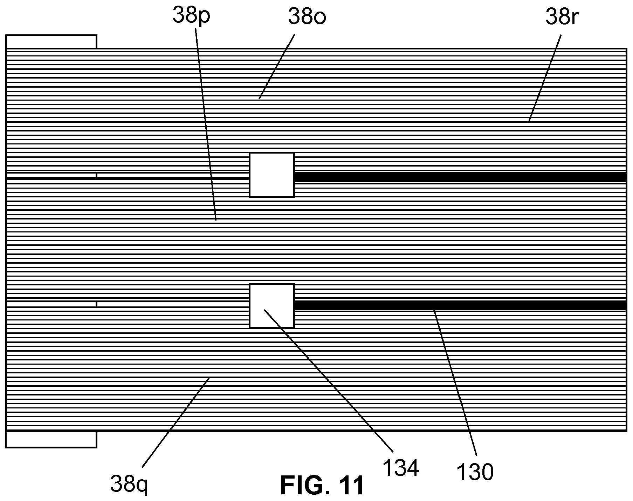

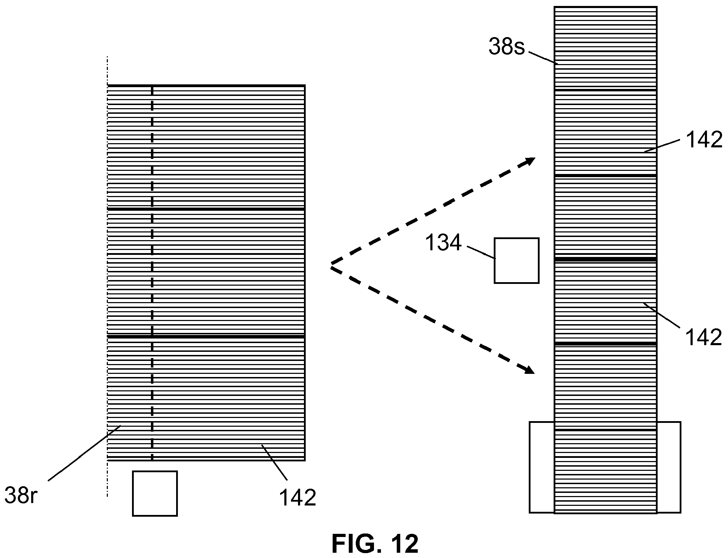

FIGs. 11 and 12 illustrate some of the present methods for forming an off-axis fiber-reinforced tape. Starting with FIG. 11, in some methods, one or more sections of fiber-reinforced tape (e.g., 38o-38q) can be unrolled from respective rolls such that the lengths of the sections are aligned. The sections can be joined along their lengths (e.g., with bonds 130) to form a wider tape (e.g., 38r). Such joining can be performed using, for example, a welder (e.g., 134) or any other technique described above. As shown, three tapes are joined to form the wider tape; however, any suitable number of tapes can be joined, such as, for example, 2, 3, 4, 5, 6, 7, 8, 9, 10, or more tapes, to form a wider tape having a desired width. Each of the tapes, and thus the wider tape, can have the same fiber direction.

Turning to FIG. 12, the wider tape can be cut (e.g., along the depicted dashed line) to separate sections (e.g., 142) of the wider tape. Each of these sections can then be joined end-to-end (e.g., using welder 134 or any other technique described above) to form a tape (e.g., 38s) having a fiber orientation that differs from that of the wider tape. The fiber orientation of tape 38s can be varied by changing the angle at which the wider tape is cut to form the wider tape sections. Tape 38s can be rolled onto a respective roll, after which tape can be used in any of the methods described above.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. A method for producing a laminate, the method comprising:
unrolling a first section of a fiber-reinforced tape from a first roll, the first section having a first width that is equal to a width of the tape on the first roll;
unrolling a second section of a fiber-reinforced tape from a second roll, the second section having a second width that is:
equal to a width of the tape on the second roll; and
equal to or larger than the first width;
cutting the first section along its width to separate one or more rectangular first laminae from the first section, each of the first lamina(e) having a length that is within 5% of the second width;
cutting the second section along its width to separate one or more rectangular second laminae from the second section, each of the second lamina(e) having a length that is within 5% of the first width; and
layering the laminae to form a rectangular stack:
in which the width(s) of the first lamina(e) are aligned with the length(s) of the second lamina(e); and
having a length that is within 5% of the second width and a width that is within 5% of the first width.

2. The method of claim 1, wherein the second width is at least 10% larger, optionally, at least 30% larger, than the first width.

3. The method of claim 1 or 2, wherein each of the fiber-reinforced tapes is a unidirectional tape, the fibers of which are aligned with the length of the tape.

4. The method of any of claims 1-3, comprising:
joining the laminae in the stack to one another;
wherein, optionally, joining the laminae comprises spot-joining the laminae.

5. The method of claim 4, wherein joining the laminae is performed at least by:
(1) layering a first one of the laminae on a second one of the laminae;
(2) joining the first lamina to the second lamina;
(3) layering a third one of the laminae on the second lamina; and
(4) joining the third lamina to the second lamina.

6. The method of any of claims 1-5, wherein, for each of the sections, a portion of the section is unrolled after layering at least one of the laminae on or to form the stack.

7. A method for producing a laminate, the method comprising:
unrolling two or more sections of fiber-reinforced tape, each from a respective roll and having a width that is equal to a width of the tape on the roll, the sections including two or more first sections, for each of which the width is within 5% of a first width;
layering the sections to form an overlapping region including each of the sections such that:
in the overlapping region, the widths of the first sections are parallel to one another; and
the overlapping region has a width that is within 5% of the first width; and separating at least a portion of the overlapping region from other portions of the sections
at least by cutting the first sections along their widths and such that a stack of laminae having a width that is within 5% of the first width is formed.

8. The method of claim 7, wherein:
for the tape of at least one of the first sections, the fibers are angularly disposed at a first angle relative to the length of the tape;
for the tape of at least one other of the first sections, the fibers are angularly disposed at a second angle relative to the length of the tape; and
a difference between the first and second angles is at least 10 degrees.

9. The method of claim 7 or 8, wherein:
the sections include one or more second sections, for each of which the width is within 5% of a second width that is larger or smaller than the first width;
layering the sections is performed such that:
in the overlapping region, the width(s) of the second section(s) are perpendicular to the widths of the first sections; and
the overlapping region has a length that is within 5% of the second width;
separating the portion of the overlapping region is performed at least by cutting the second section(s) along their width(s) and such that the stack of laminae has a length that is within 5% of the second width.

10. The method of claim 9, wherein the second width is at least 10% larger or smaller, optionally, at least 30% larger or smaller, than the first width.

11. The method of claim 9 or 10, wherein each of the tape of at least one of the first sections and the tape of at least one of the second section(s) is a unidirectional tape, the fibers of which are aligned with the length of the tape.

12. The method of any of claims 7-11, comprising:
joining the sections in the overlapping region to one another;
wherein, optionally, joining the sections comprises spot-joining the sections.

13. The method of claim 12, wherein joining the sections is performed before separating the portion of the overlapping region.

14. The method of claim 12, wherein joining the sections is performed after separating the portion of the overlapping region.

15. The method of any of claims 12-14, comprising, before joining the sections, using a heat source to heat the sections.

16. The method of any of claims 1-15, wherein, for each of the tapes, the matrix material comprises a thermoplastic material.

17. A laminate comprising:
a rectangular stack of two or more rectangular fiber-reinforced laminae, the stack defining a length and a width of the laminate;
wherein the laminae include one or more unidirectional (UD) laminae, each having:
a length along which the fibers of the lamina are aligned and that is aligned with one of the length and the width of the laminate;
a width that is within 5% of the other of the length and the width of the laminate;
a center section that extends along the length of the lamina; and
first and second edge sections that extend along the length of the lamina and are disposed on opposing sides of the center section, each of the edge sections:
connecting the center section to an edge of the lamina; and
having a width that is at least 10% of the width of the lamina;
wherein the fiber volume fraction of at least one of the edge sections is at least 1% lower than the fiber volume fraction of the center section.

18. The laminate of claim 17, wherein, for each of the UD lamina(e), for each of the edge sections, the fiber volume fraction is at least 1% lower than the fiber volume fraction of the center section.

19. The laminate of claim 17 or 18, wherein:
the UD lamina(e) include at least first and second UD laminae; and
the length of the first UD lamina is aligned with the length of the laminate; and
the length of the second UD lamina is aligned with the width of the laminate.

20. The laminate of any of claims 17-19, wherein, for each of the UD lamina(e), along the width of the lamina, the distribution of fiber volume fraction is bell-shaped.
